# EUROPEAN PATENT APPLICATION

(11) **EP 4 131 026 A1**
(43) Date of publication of application: **08.02.2023**
(21) Application number: 22178922.5
(22) Date of filing: 14.06.2022
(51) Int. Cl.: G06F 16/583, G06F 16/35, G06F 16/383

(54) **SYSTEM AND METHOD FOR MULTI-MODAL TRANSFORMER-BASED CATAGORIZATION**

(30) Priority: 05.08.2021 US 202163229624 P; 27.01.2022 US 202217586667
(71) Applicant: Rakuten Group, Inc., Setagaya-ku Tokyo 158-0094 (JP)
(72) Inventor: CHEN, Lei, Setagaya-ku, Tokyo, 158-0094 (JP); CHOU, Hou Wei, Setagaya-ku, Tokyo, 158-0094 (JP); XIA, Yandi, Setagaya-ku, Tokyo, 158-0094 (JP); MIYAKE, Hirokazu, Setagaya-ku, Tokyo, 158-0094 (JP)
(74) Representative: Hoffmann Eitle

(57) **Abstract**

A transformer categorization architecture is applied to image and text data sets to determine a taxonomy for items in a large database of products. Aggregating recommendations from a multi-modal categorization process achieves a more accurate product classification with potentially less training. The system is implemented to support an e-commerce portal and user facilitated access to products for online purchases.

## Description

### Cross Reference to Related Patent Applications

This application claims benefit of Provisional Patent Application SN 63/229,624 titled: "Multimodal Item Classification Based on Transformers" filed on August 5, 2021, the disclosure of which is incorporated by reference herein as if restated in full. Several references discussed below are provided in the References listed therein.

### Field of Invention

The invention herein is directed to novel systems and methods for transformer-based data processing of image and text data to facilitate item categorization.

### Background

There is a growing interest in automating the process of creating and updating the datasets of core descriptive materials used to support user searching for ecommerce-based products online. Various approaches have been proposed to enhance the automated process of creating a dataset from product metadata that conforms to a selectively defined taxonomy structured to facilitate user product searches.

Item categorization (IC) is a core technology in modern e-commerce. Since there can be millions of products and hundreds of labels in e-commerce markets, it is important to be able to map these products to their locations in a product category taxonomy tree efficiently and accurately so that buyers can easily find the products they need. Categorization of products facilitate e-commerce website operation and provides a more compelling experience for users during online shopping activity. Therefore, IC technology with high accuracy is needed to cope with this demanding task.

Product data can include text (such as titles) and images (including product labels). Although most IC research has focused on using text-based cues, images of products also contain useful information. For example, in some sub-areas like fashion, the information conveyed through images is richer and more accurate than through the text channel. Better classification may be achieved by utilizing both channels - text and image - of data to extract features regarding a product.

Traditionally, item classification was accomplished by focusing on text data and following a two-step operation; a first step of feature extraction (handcrafted) followed by classification. More recently, alternatives were explored with feature extraction of both text and image data associated with individual products (MIC or "multi-modal item classification").

Transformer architecture has become a mainstream feature extraction approach and gained widespread applications in natural language processing (NLP). Early research, (Zahavy et al., "Is a picture worth a thousand words" A Deep Multi-Modal Fusion Architecture for Product Classification in e-commerce. 2016 - the contents of which are incorporated by reference as if restated in full) studied MIC where multi-label classification using both titles (text) and images was conducted on products listed on the Walmart.com website. They used a convolutional neural network to extract representations from images, then designed several policies to fuse the outputs of the two models. This led to improved performance over individual models separately.

A MIC data challenge organized in the SIGIR'20 e-commerce workshop provided a product list containing about 99,000 products containing a textual title, an optional detailed description, and a product image. The MIC task was to predict 27 category labels, which are from 4 major genres, i.e., books, children, household, and entertainment. Several teams submitted their MIC systems.

The best performing solution for that problem involved fine-tuning pre-trained text and image encoders to serve as feature extractors and then apply a bi-modal fusion mechanism to combine predictions. Regarding text feature extraction, the Transformer-based BERT model (Devlin et al., "Pre-training of Deep Bidirectional Transformer for Language Understanding" 2019 - the contents of which are incorporated by reference) was used. Regarding image feature extraction, ResNet (He et al., "Deep residual learning for image recognition" 2016) was used, including the standard ResNet-152 and the recently released Big Transfer (BiT) model (Kolesnikovet al., 2020). Based on the methods' complexity, simple decision-level late fusion (Biet al., 2020), highway network (Chou et al., 2020), and co-attention (Chordia and Vijay Kumar, 2020) were tried and the simplest decision level fusion method performed best within this framework.

While significant progress was made, a problem often arises where item classifications are attempted based on both image and text data sets on each product. For example, several issues arise where extraction from text is accomplished using a transformer-based approach and image data extraction employs a non-Transformer based techniques such as ResNet. In fusing these sources, the underlying algorithms grow in complexity and training becomes more arduous.

### Summary

It is an objective of the present invention to avoid these problems and to provide a less complex set of processing steps to achieve faster training and ultimately a more efficient search operation.

It is an object of the present invention to provide a novel data processing system for receiving a USER inquiry and generating a search result response based on a categorized dataset created by collectively processing both text and image product data.

It is also an object of the present invention to provide a dataset configured by a categorization processor, wherein the dataset conforms to a selected taxonomy regarding products commercially available for online purchase.

It is another object of the present invention to provide categorization processing comprised of both image and text data using a transformer process for data extraction.

To achieve these and other objects, the present invention provides a data processing system implemented with a model that applies feature extraction processing using transformers on uni-model channels - here text and images. After extraction, the system employs a fusion step to obtain multi-model representations, and a multi-layer perception head to make final predictions.

In accordance with variations of this invention, selectively staged intervals are employed in the item categorization sequence. At first, the data processor is programmed with the initially untrained taxonomy classification algorithm; next data entries for plural products that include both text and image are processed by the system as part of a training session and the results of the training employed to finalize the parameters of the categorization algorithm. This is then used to support the creation of a categorized dataset on the e-commerce products.

In the next stage, a final resulting taxonomy categorized dataset is created for products appearing and available on an e-commerce shopping portal. This final dataset is then applied to support a USER accessible searching processor to facilitate the location of products on the e-commerce shopping portal in response to user requests. USER data requests, search responses and USER follow on responses are then tracked to assess performance of the taxonomy; and the efficiency and accuracy of the system in delivering search answers to inquiries is measured.

In one embodiment, processing is controlled by programmed instructions using an imperative language such as PyTorch to effect high speed training using graphics processing units ("GPU") processing. Both image and text data are processed using transformer-based approaches. A BERT model is trained and encodes a textual product title into an embedded sequence forming a vector with a dimension of 1024. The transformer image model is based on the ViT applied directly on image P × P patch sequence. Once converting the image into these patches, the ViT converts these patches into visual tokens. The outputs from each transformer channel are aggregated using a cross attention fusion process, resulting in a single prediction for classifying the product.

### Figures

Figure 1 is directed to a system functional block diagram corresponding to the present invention;
Figure 2 is directed to a system architecture for text transformation;
Figure 3 is directed to a further illustration of text transformation;
Figure 4 is directed to a system architecture for image transformation; and
Figure 5 is directed to an operational flowchart depicting an illustrative example of the present invention.

### Detailed Description

Briefly in overview, the present invention facilitates item categorization in support of e-commerce operations. A vast and diverse collection of products are typically offered at an e-commerce web portal. Customers enter requests and are presented with responsive web pages including images and descriptions of products triggered by the user request. Groupings of products are pulled and presented together based on the request and the portal taxonomy used to classify products into these groupings.

The process of creating the classified dataset of products is dynamic as every day new products are added to the dataset with the classification delineated by the taxonomy. The data lake supporting the portal is populated with taxonomy data by the classification engine. The engine is formed by two processing paths. Text data is taken for each product and processed by a transformer-based algorithm and processor; image data is likewise taken for each product and processed by a transformer-based image algorithm and processor. For text data, BERT transformer processes the text and outputs clues to support classification. Image data is processed by a transformer approach such as the ViT method. In both, a transformer engine is a digital data processor programmed to implement the selected transformer model including a processor that implements a properly programmed GPU. A fusion step combines the two transformer engine outputs to form a prediction for item (product) classification. Prior to working against actual product data, the engine is trained and the algorithms modified to enhance accuracy.

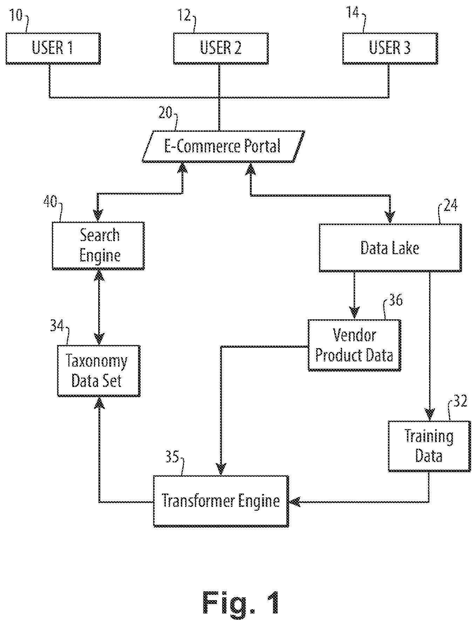

Turning now to Fig 1, a functional block diagram depicts the inventive system within a particular working environment. As presently configured, the invention supports e-commerce Web Portal 20 connected to a public access network such as the Internet to provide a virtual shopping center. Users 10, 12 and 14 navigate online to visit Portal 20 to search for products and shop. Storage of data includes a database of searchable products stored (with other data) in Data Lake 24 with digitally stored details and descriptors on products and virtual storefronts searchable by Users.

Continuing in Figure 1, Data Lake 24 includes product data organized into groupings and classifications of products in accordance with a specific taxonomy. This allows for facilitated reporting of search results. In fashion footwear for example, such as a grouping of leather boots, these boots are grouped by the taxonomy governing the products in the Data Lake. There are typically multiple layers of groupings within the taxonomy in multiple product categories.

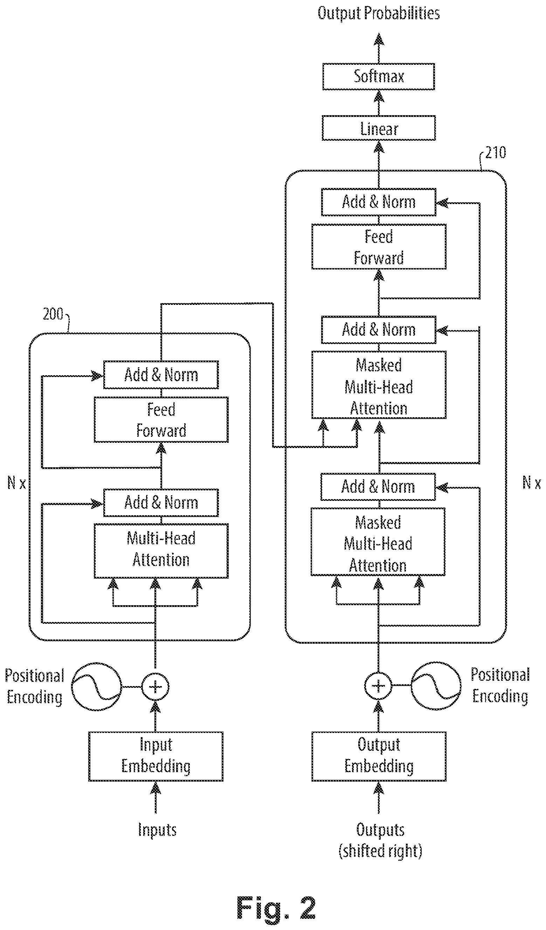

Continuing with Fig. 1, taxonomy data in block 35 is generated by the Transformer engine 34. The Transformer engine is described in more detail in Figures 2-5, and employs transformer operations applied individually to the text product data (eg, product title) and image data (eg photo of product). To enhance transformer operations in the engine, the algorithms are trained with selective training data, block 32 in advance of receiving product specific data 36. As operation is dynamic, updated product data is supplied to the engine at periodic intervals to support updated product offerings and pricing at the Portal 20.

A generalized system architecture is provided in Figure 2 for a text transformer processor. Generally, the system uses stacked self-attention and pointwise, fully connected layers for both the encoder and decoder, depicted as blocks 200 and 210 respectively in Figure 2. (See Zahavy et al. *Supra)*

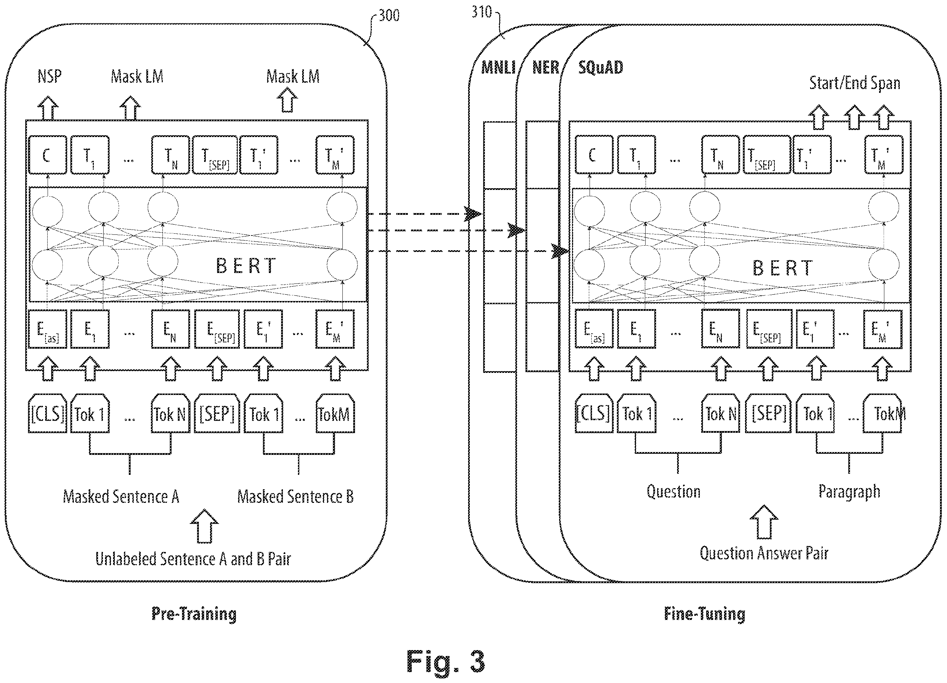

Figure 3 provides a schematic illustration of a particularly useful text transformer model known as BERT. Operation is two-part; pre-training and fine tuning. During pre-training the model is trained on unlabeled data over different pre-training tasks. For fine-tuning, the model is first initialized with the pre-trained parameters and all of the parameters are fined tuned using labled data from the downstream tasks. (see Devlin, et al. *Supra*)*.* Apart from the output layers the same architectures are used in both pre-training (300) and fine-tuning (310).

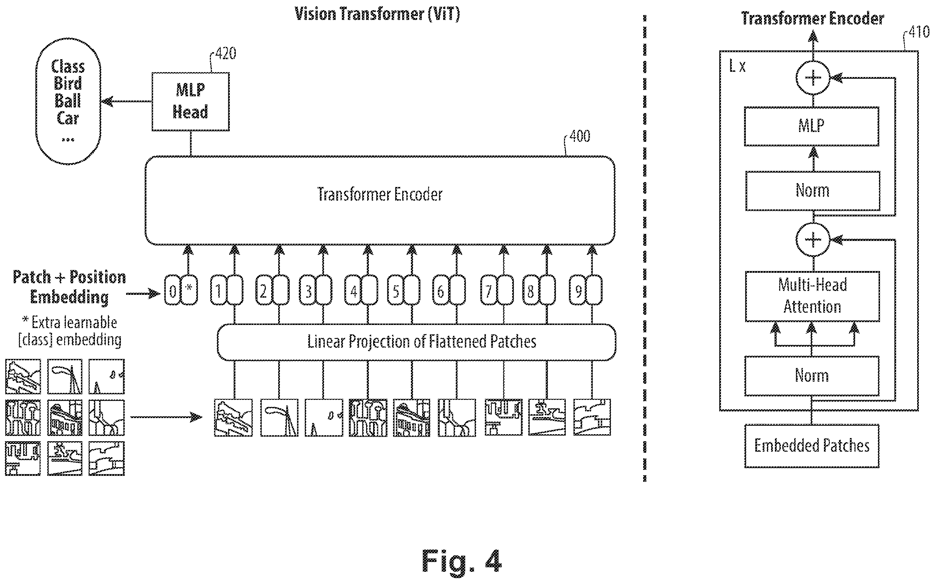

Figure 4 provides a high-level architecture for the vision (ie image) transformer for use with and illustrative of the present invention. Patch and position data is taken from the image file divided into fixed-size patches, that are linearly embedded with position embeddings, and the resulting vectors are fed into a standard transformer engine, blocks 400 and 410. See specifically, Dosovitsky, et al *Supra.*

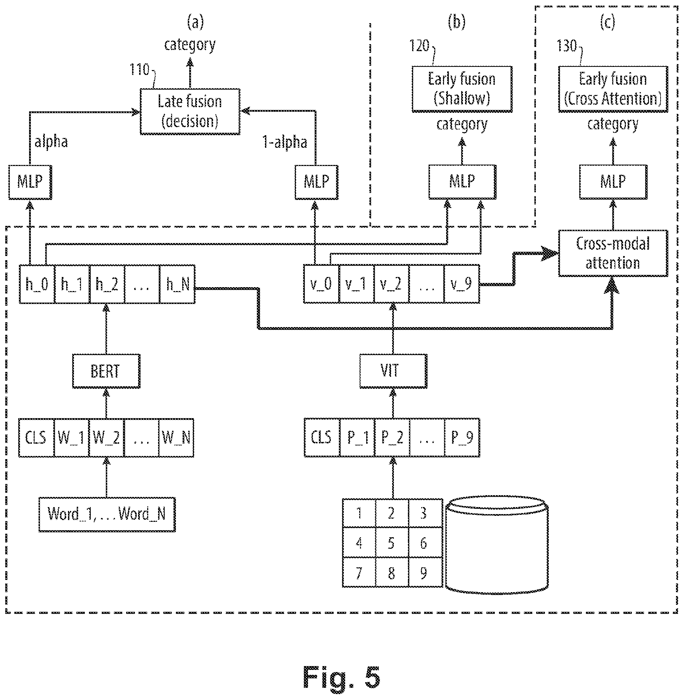

Now turning to Fig. 5 the specifics of the multi-model transformer engines are provided. Three processing paths are shown, each having a common initial phase but ending with a different fusion step. Operation is sequential and starts by processing item image and text data.

The system of Figure 5 includes three-fusion techniques for combining the outputs from text transformer engine and image transformer engine. These operations are identified in Figure 5. Moving right to left, two early fusion operations are provided in separate paths - cross attention and "shallow" early fusion. A third approach is labeled "late" fusion and represents the simplest method of combining outputs from the transformer engines. Weighting is applied (*alpha,* and 1 - *alpha*) to interpolate the posterior probabilities estimated by the text transformer and the image transformer models, where *alpha* is estimated from a held out set.

Continuing with Figure 5, a shallow early fusion block 120 takes a first token from every input sequence to the text transformer model to provide a global representation. For both transformer models, tokens are concatenated to create a multimodal input to the MLP as vectors used to predict multiclass category labels. It is labeled the "shallow" method because it is simply a feature concatenation. This approach is generally discussed in the literature (see: Siriwardhana et al. "Tuning 'BERT-like' Self Supervised Models to Improve Multi-modal Speech Emotion Recognition" 2020 the contents of which are incorporated by reference).

Continuing further with Figure 5, early fusion block 130 is directed to a cross modal attention layer for a more robust fusion result (see: Zhu et al "Multimodal Joint Attribute Prediction and Value Extraction for E-commerce Products" 2020 the contents are incorporated by reference herein). Cross-modal attention is computed by pairing Key-Value (K-V) from one modality with the (Q) from the other modality. Because images associated with text tiles do not always carry information semantically mating with titles, universally fusing two modalities may be suboptimal. One approach to minimize this issue uses a gate designed to filter out visual noise (see Zhu et al *Id,* incorporated by reference here). Using this approach, a text title encoded "h" uses two attention weighting approaches. First, self-attention on the text domain only and cross-modal attention considering the visual domain information. The second part is controlled by a gate "VG" that is learned from both local text representation and global visual representations. (see Provisional Application no SN 63/229,624 titled: "Multimodal Item Classification Based on Transformers" filed on August 5, 2021; Section 3.3.3).

A preferred implementation will provide a single fusion operation; A particularly preferred implementation will use early fusion of the bi-modal vectors from the transformer engines fed to the cross modal attention module, using visual gate control to optimally combine bi-modal signals. The fusion output passes to the MLP, for generating predictions. In training, the label prediction is compared to ground truth label and its difference is used to train the entire MIC model in a back-propagation way.

Processing prior to fusion is further depicted in Figure 5. Text processing is accomplished by a BERT based transformer with word or tokens processed sequentially prior to fusion. Image processing applies a ViT based image transformer that with a multi-layer Perception (MLP) head to estimate image labels (See Dosovitskiy et al "An image is worth a 16x16 words: Transformers for image recognition at scale." 2020 - the contents are incorporated by reference).

Supervised learning on a massive image data set is used to pre-train the ViT model, where larger training sets increases system performance. The pre-trained ViT model encodes the product image by converting the image into a matrix of P - patches. After processing these into tokens and combined with a special [CLS] visual token to represent the entire image, the M=P×P+1 long sequence is fed into the model. The encoded output is the sequence: v = (v0 + v1 + v2+....), where M=P×P. For this arrangement, ViT L-16 is preferred.

Testing of the above system provides enhanced categorization. A product catalog including over one million products was processed using four root level genre categories: Predictions of leaf-level product categories from image and text data for the products in the catalog were made and scored. Model performance varied and are summarized in Tables 1 & 2 of Section 5 of the Provisional Application SN 63/229,624 titled: "Multimodal Item Classification Based on Transformers" filed on August 5, 2021. (The contents previously incorporated by reference.)

Variations of this arrangement are can be applied as dictated by the application. For e-commerce, search results will be processed by the taxonomy data set to locate and present a grouping of products within a category corresponding to the search request. Other taxonomy driven results are facilitated by the inventive modeling which is adjusted to meet the goals of the application.

This written description uses examples to disclose certain implementations of the disclosed technology, including the best mode, and also to enable any person skilled in the art to practice certain implementations of the disclosed technology, including making and using any devices or systems and performing any incorporated methods. The patentable scope of certain implementations of the disclosed technology is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Further embodiments of the present invention are defined as E1-E23 further below:
E1. A system directed to item categorization comprising:
   digital data storage with data input and output capable of outputting a set of item data that includes image data and text data associated individually with at least one item;
   a program controlled digital processor connected to and in communication with said digital data storage wherein said programmed processor is capable of item categorization of said stored data, said programmed processor including:
      a text-based transformer processor for identifying features of one or more items based on said text data and generating a digital output;
      an image-based transformer processor for identifying features of one or more items based on said stored image data and generating a digital output; and
      a fusion processor including a multi-layer perception head for combining text and image transformer processor outputs to generate an item classification prediction
E2. The system of embodiment E1 wherein said fusion processor includes a multi-layer perception head for combining text and image transformer processor outputs in a cross modal attention module to form a multi-model representation wherein said multi-layer perception head outputs an item classification prediction.
E3. The system of embodiment E1 wherein said fusion processor multi-layer perception head receives transformer engine outputs directly and generates text and image based classification predictions that are combined to generate a weight based item classification prediction.
E4. The system of embodiment E1 wherein said fusion processor including a multi-layer perception head for combining text and image transformer processor outputs by using tokens that are concatenated for input into the multi-layer perception head.
E5. The system of embodiment E1 wherein said text-based transformer applies a BERT model.
E6. The system of embodiment E1 wherein said image-based transformer applies a ViT model.
E7. The system of embodiment E1 wherein said text-based model is fine tuned for product title data.
E8. The system of embodiment E6 wherein said image-based model is fine tuned for ViT L-16.
E9. The system of embodiment E1 wherein one or more models are pre-trained on a pre-set dataset and implemented by a GPU for training.
E10. A data processing system for implementing an e-commerce portal offering goods online for purchase, said system comprising:
   a search engine for receiving inquiries from users seeking information regarding products for online purchase;
   a storage connected to said portal for storing retrieval data regarding one or more products responsive to said user search request;
   a transformer processor for categorization of products based on image and text data associated with said products, wherein said transformer processor implements categorization using a text based transformer processor and an image based transformer processor with categorization clues generated by each;
   a taxonomy data set comprising a categorization for products determined by said transformer processor, used for configuring a response to said search request to reflect product categorization.
E11. The system of embodiment E10 wherein said transformer processor implements a BERT text transformer model and a ViT image transformer model with resulting clues outputted to a fusion step to achieve a single recommendation for a given product regarding its categorization.
E12. The system of embodiment E10 wherein said transformer processors are trained to facilitate model accuracy in proper categorization of selected products.
E13. The system of embodiment E10 wherein a grouping of products within a single category predicted by the transformer processor is provided in response to a user search request.
E14. The system of embodiment E11 wherein said transformer processor applies a cross attention fusion process to aggregate clues from each transformer processor.
E15. A data processing method to classify a large diverse data set of individual items many of which are associated with image and text data corresponding to product type and class, the method comprising:
   inputting text data for a product into a first transformer processor to ascertain clues regarding what class the product fits;
   inputting image data for said product into a second transformer processor to ascertain clues regarding what class the product fits;
   aggregating clues from said first and second transformer processors into a final prediction regarding a class for that product, wherein said aggregating step includes a cross attention fusion process; and
   outputting said final prediction in association with said product into a taxonomy data set stored for digital access.
E16. The method of embodiment E15 wherein the text transformer processor uses BERT processing and the image transformer processor uses ViT processing.
E17. The method of embodiment E16 wherein the transformer processors are encoded for operation on GPU based processors.
E18. The method of embodiment E15 wherein the transformer processors are trained against a data set of products having known classifications.
E19. The method of embodiment E18 wherein the taxonomy set is used to facilitate responses to user queries made online to an ecommerce portal.
E20. The method of embodiment E19 wherein the number of products having text and image data that are processed exceeds one million which are classified in the taxonomy set into at least four categories.
E21. A computer implemented method of training a computerized classification system, comprising:
   a. a first computer memory for storing a pre-determined set of training data comprising text data associated with items within a known category;
   b. a second computer memory for storing a pre-determined set of training data comprising image data associated with items within a known category;
   c. processing said text data in a text based transformer model to characterize values within the model that optimize matching items to known categories;
   d. processing said image data in an image based transformer model to characterize values within the model that optimize matching items to known categories; and
   e. storing said characterized model values for use against data that has not been classified.
E22. The method of embodiment E21 wherein said item classification system processes text and image data with transformer processors and an early fusion processor.
E23. The method of embodiment E21 wherein said item classification system further includes a cross modal attention module and a multi-layer perception head to form a classification prediction.

## Claims

1. A system directed to item categorization comprising:
digital data storage with data input and output capable of outputting a set of item data that includes image data and text data associated individually with at least one item;
a program controlled digital processor connected to and in communication with said digital data storage wherein said programmed processor is capable of item categorization of said stored data, said programmed processor including:
a text-based transformer processor for identifying features of one or more items based on said text data and generating a digital output;
an image-based transformer processor for identifying features of one or more items based on said stored image data and generating a digital output; and
a fusion processor including a multi-layer perception head for combining text and image transformer processor outputs to generate an item classification prediction

2. The system of claim 1 wherein said fusion processor includes a multi-layer perception head for combining text and image transformer processor outputs in a cross modal attention module to form a multi-model representation wherein said multi-layer perception head outputs an item classification prediction.

3. The system of claim 1 wherein said fusion processor multi-layer perception head receives transformer engine outputs directly and generates text and image based classification predictions that are combined to generate a weight based item classification prediction.

4. The system of claim 1 wherein said fusion processor including a multi-layer perception head for combining text and image transformer processor outputs by using tokens that are concatenated for input into the multi-layer perception head.

5. The system of claim 1 wherein said text-based model is fine tuned for product title data.

6. A data processing system for implementing an e-commerce portal offering goods online for purchase, said system comprising:
a search engine for receiving inquiries from users seeking information regarding products for online purchase;
a storage connected to said portal for storing retrieval data regarding one or more products responsive to said user search request;
a transformer processor for categorization of products based on image and text data associated with said products, wherein said transformer processor implements categorization using a text based transformer processor and an image based transformer processor with categorization clues generated by each;
a taxonomy data set comprising a categorization for products determined by said transformer processor, used for configuring a response to said search request to reflect product categorization.

7. The system of claim 6 wherein said transformer processor implements a BERT text transformer model and a ViT image transformer model with resulting clues outputted to a fusion step to achieve a single recommendation for a given product regarding its categorization.

8. The system of claim 6 wherein said transformer processors are trained to facilitate model accuracy in proper categorization of selected products.

9. The system of claim 6 wherein a grouping of products within a single category predicted by the transformer processor is provided in response to a user search request.

10. The system of claim 7 wherein said transformer processor applies a cross attention fusion process to aggregate clues from each transformer processor.

11. A data processing method to classify a large diverse data set of individual items many of which are associated with image and text data corresponding to product type and class, the method comprising:
inputting text data for a product into a first transformer processor to ascertain clues regarding what class the product fits;
inputting image data for said product into a second transformer processor to ascertain clues regarding what class the product fits;
aggregating clues from said first and second transformer processors into a final prediction regarding a class for that product, wherein said aggregating step includes a cross attention fusion process; and
outputting said final prediction in association with said product into a taxonomy data set stored for digital access.

12. The method of claim 11 wherein the transformer processors are trained against a data set of products having known classifications.

13. A computer implemented method of training a computerized classification system, comprising:
a. a first computer memory for storing a pre-determined set of training data comprising text data associated with items within a known category;
b. a second computer memory for storing a pre-determined set of training data comprising image data associated with items within a known category;
c. processing said text data in a text based transformer model to characterize values within the model that optimize matching items to known categories;
d. processing said image data in an image based transformer model to characterize values within the model that optimize matching items to known categories; and
e. storing said characterized model values for use against data that has not been classified.

14. The method of claim 13 wherein said item classification system processes text and image data with transformer processors and an early fusion processor.

15. The method of claim 13 wherein said item classification system further includes a cross modal attention module and a multi-layer perception head to form a classification prediction. '
